# EUROPÄISCHE PATENTSCHRIFT

(11) **EP 2 182 680 B1**
(45) Veröffentlichungstag und Bekanntmachung des Hinweises auf die Patenterteilung: **11.07.2012**
(21) Anmeldenummer: 08019184.4
(22) Anmeldetag: 03.11.2008
(51) Int. Cl.: H04L 12/437

(54) **Verfahren zum Betrieb eines Kommunikationsnetzwerkes und Kommunikationskomponente**
Method for operating a communication network and communication components
Procédé destiné au fonctionnement d'un réseau de communication et composants de communication

(43) Veröffentlichungstag der Anmeldung: 05.05.2010
(73) Patentinhaber: Siemens Aktiengesellschaft, 80333 München (DE)
(72) Erfinder: Steindl, Günter, 92284 Poppenricht (DE)

(56) Entgegenhaltungen:
- US-A- 5 282 200
- US-A1- 2005 207 348
- US-A1- 2006 245 351
- US-B1- 6 766 482

## Beschreibung

Die Erfindung betrifft ein Verfahren zum Betrieb eines Kommunikationsnetzwerkes, welches in einer Ringtopologie aufgebaut ist, umfassend mehrere Knoten, welche über Verbindungswege miteinander in Verbindung stehen, wobei ein erster Knoten als ein Ring-Master konfiguriert wird.

Des Weiteren betrifft die Erfindung eine Kommunikationskomponente mit zumindest einem ersten Anschluss für eine erste Datenleitung und einem zweiten Anschluss für eine zweite Datenleitung.

Um beispielsweise bei einem Ethernet mit aktiven Komponenten, wie z.B. einem Switch, eine Verfügbarkeit des Netzes zu verbessern, müssen alternative Wege für die Kommunikation vorgesehen werden. Dazu sollten Fehler in den Übertragungsstrecken oder Verbindungswegen schnell und sicher erkannt werden, daraufhin müssen alternative Verbindungswege eventuell berechnet werden und schnell und sicher umgeschaltet werden können.

Bei heutigen bekannten Protokollen wie z.B. "Rapid Spanning Tree", welches in der IEEE-Norm definiert ist oder einem MRP-Protokoll, welches definiert ist in der IEC, oder einem PRP-Protokoll ist es von Nachteil, dass diese Protokolle sehr komplex aufgebaut sind und auf unterschiedlichste Verfahren um zumindest einen Teil der folgenden Kriterien zu erfüllen aufsetzen:
- Hohe Verfügbarkeit des Kommunikationsnetzes,
- zusätzliche Fehler bei Duplicity (single side down) müssen erkannt werden, dieser Weg muss unterbrochen und auf einen alternativen Weg umgeschaltet werden,
- wird der erkannte Fehler behoben, darf es nicht zu einem erneuten, in diesem Fall überflüssigen Umschaltvorgang kommen,
- die Umschaltzeiten zwischen den Wegen sollen möglichst klein sein,
- ein Implementierungsaufwand bei den einzelnen Geräten der Kommunikationskomponenten soll gering sein und nach Möglichkeit mit Standard Ethernet-Hardware realisiert werden können.

US 2005/0207348 A1 offenbart einen Netzwerkknoten mit einem Schaltelement zur Vermeidung eines geschlossenen Rings, wenn der Netzwerkknoten als ein Master-Knoten innerhalb des Netzwerkrings ist. Im Falle einer Störung einer Netzwerkverbindung des Netzwerkrings wird die Funktion des Master-Knotens vom vorherigen Master-Knoten auf einen Netzwerkknoten übertragen, der mit der gestörten Netzwerkverbindung direkt verbunden ist.

US 5,282,200 offenbart ein Verfahren zur Datenübertragung in einem Netzwerkring mit einer Vielzahl von Netzwerkelementen, die untereinander über das Netzwerk Signale austauschen. Das Verfahren umfasst die Definition eines Netzwerkelements als Master und die Detektierung einer Störung.

US 2006/0245351 A1 offenbart ein Verfahren zur Detektierung einer Störung in einem ringförmigen Netzwerk und die Übermittlung einer Multicast-Nachricht über das Ringnetzwerk, die Informationen über die Störung umfasst. Zusätzlich wird ein neuer Ring-Master definiert. Außerdem wird ein Ringport, der mit der Störstelle verbunden ist, blockiert.

Es ist daher Aufgabe der Erfindung ein Verfahren bereitzustellen, welches eine Umschaltzeit im Fehlerfalle von bisher bestehenden Kommunikationswegen auf neue Kommunikationswege möglichst klein hält.

Die Aufgabe wird für das eingangs genannte Verfahren dadurch gelöst, dass in einem ersten Schritt i) zum Erkennen einer Störung auf einem Verbindungsweg die Verbindungswege mittels Überwachungsmittel in den Knoten überwacht werden, und in einem nächsten Schritt ii) bei Erkennen einer Störung durch diejenigen Knoten, welche aufgrund der Störung den zwischen ihnen bestehenden gestörten Verbindungsweg aufweisen werden je eine erste Störmeldung und eine zweite Störmeldung in Richtung des als Master konfigurierten Knotens gesendet, wobei jeder Knoten im Netzwerk die Störung gemeldet bekommt wobei ein Lernmechanismus in den Knoten durch die Störmeldung deaktiviert wird, und in einem dritten Schritt iii) der Ring-Master eine Quittung sendet, welche bei Erreichen der Knoten, welcher aufgrund der Störung den zwischen ihnen bestehenden gestörten Verbindungsweg aufweisen, zumindest auf einen dieser Knoten die Funktion des Ring-Masters übertragen wird wobei durch die Quittung der Lernmechanismus wieder aktiviert wird. Bei diesem Verfahren wird vorteilhafter Weise jede Änderung eines Zustandes eines Verbindungsweges an einen ausgezeichneten Knoten, nämlich den Ring-Master gemeldet. Dieser Ring-Master sorgt im Fehlerfall für eine koordinierte Wegeumschaltung und verfahrensgemäß wird die Funktion des Ring-Masters an einen der Knoten bei der Fehlerstelle weitergegeben, d.h. der ursprüngliche Knoten in seiner Funktion als Ring-Master verliert seine Master-Rolle und überträgt sie dem der Fehlerstelle nahen Knoten. Im Beispiel von einem Ethernetring muss ein solcher topologischer Ring zur vollständigen Funktionstüchtigkeit eines Ethernetringes offen betrieben werden. Dazu weist der jeweilige Master ein Schaltelement auf, welches er in der Rolle des Masters öffnet und somit den Ring offen betreiben kann. Das Schaltelement kann dabei sowohl als eine physikalische Trennstelle oder auch als eine logische Trennstelle oder als eine Kombination aus beiden ausgelegt sein. Das Übertragen der Master-Rolle im Störungsfall ist weiterhin von Vorteil, da nach erfolgreicher Reparatur der gestörten Stelle des Übertragungsweges eine weitere Wegeumschaltung vermieden werden kann. Der jeweilige Knoten, welche die Masterrolle empfangen hat, sorgt neben einer physikalischen Unterbrechung des Schaltelementes zusätzlich für eine logische Unterbrechung des Ringes um einen Ringschluss nach erfolgter Reparatur der gestörten Verbindungsleitung zu vermeiden. Zusammenfassend kann gesagt werden: Wird eine Störung eines Verbindungsweges erkannt, so geht von beiden Seiten dieser Störung eine Meldung an alle nachfolgenden Knoten bis hin zum aktuellen Ring-Master. Dieser spiegelt die Meldung in einer Quittung zurück bis zum Ort der Störung.

Durch die Störmeldungen wird ein Lernmechanismus in den Knoten deaktiviert. Dadurch wird ein "falsches" Lernen im Fehlerfall vermieden und neue Wege werden schneller gültig und können rascher verwendet werden. Durch diesen Schritt erhält man eine Befreiung des Restnetzes vom unnötigen Datenverkehr.

Mit der Aussendung der Quittung des Ring-Masters wird der Lernmechanismus wieder aktiviert.

Da der eingetretene Störfall vermutlich über einen längeren Zeitraum anhalten wird, ist es von Vorteil in dieser neuen "gestörten" Konfiguration die jetzt zur Verfügung stehenden Datenwege und Verbindungswege neu zu erlernen.

In einer bevorzugten Ausgestaltung des Verfahrens wird durch die Störmeldungen eine Filter-Datenbank in den Knoten zurückgesetzt. Die Filter-Datenbank dient dazu bestimmten Adressen, bestimmte vorgezeichnete Wege vorzugeben, damit ein Datenverkehr in dem Kommunikationsnetzwerk schneller absolviert wird. Im Störungsfall haben diese "gelernten" Kommunikationswege keine Gültigkeit mehr und daher ist es vorteilhaft diese Filter-Datenbank auf Null zurückzusetzen und zunächst die jetzt gültigen Wege zu beschreiten.

In der Automatisierungstechnik wird zunehmend neben den Profibusnetzwerken auch das Ethernet eingesetzt. Ein Industrial Ethernet ist in der Automatisierungswelt als Profinet bekannt, es ist daher von Vorteil für Automatisierungslösungen, welche nach einem optimierten redundanten Kommunikationsverfahren fordern, als Knoten Ethernet-Kommunikationskomponenten einzusetzen.

Die eingangs genannte Aufgabe wird weiterhin durch eine Kommunikationskomponente mit zumindest einem ersten Anschluss für eine erste Datenleitung und einem zweiten Anschluss für eine zweite Datenleitung, dadurch gelöst, dass ein Überwachungsmittel, ein Sendemittel, eine Filter-Datenbank und ein Rücksetzmittel, welche dazu ausgestaltet sind ein Verfahren nach einem der Ansprüche 1 bis 5 auszuführen, vorhanden ist. Da insbesondere in der Automatisierungswelt raue Umweltbedingungen herrschen, wie z.B. extreme Temperaturen, Beeinflussung durch Schmutz, Staub und durch Industriemaschinen steigt bei einem in der Automatisierungswelt eingesetzten Kommunikationsnetzwerk, beispielsweise einem Industrial-Ethernet, ausgestaltet als ein Profinet, die Wahrscheinlichkeit für Störungen. Beispielsweise könnte ein industrielles Transportfahrzeug durch Überrollen eine Ethernetleitung beschädigen und somit einen Verbindungsabbruch oder sogar einen Kurzschluss zwischen den paarweise angeordneten TX/RX-Datenleitung entstehen lassen können. Der Einsatz der Kommunikationskomponente mit den entsprechend hergerichteten Überwachungsmittel, Sendemittel, Filter-Datenbank und dem Rücksetzmittel zur Steuerung der geforderten Aufgaben und zur Ausführung des genannten Verfahrens, können diese Mittel beispielsweise als Anwender programmierbare Bausteine FPGA oder ASIC in den Kommunikationskomponenten untergebracht werden.

Weitere Vorteile und zusätzliche Merkmale werden anhand der Zeichnung erläutert und beschrieben. Es zeigen:
- FIG 1 bis 5: ein Kommunikationsnetzwerk vom intakten Zustand über einen Störfall bis hin wieder zu einem intakten Zustand und
- FIG 6: eine Kommunikationskomponente.

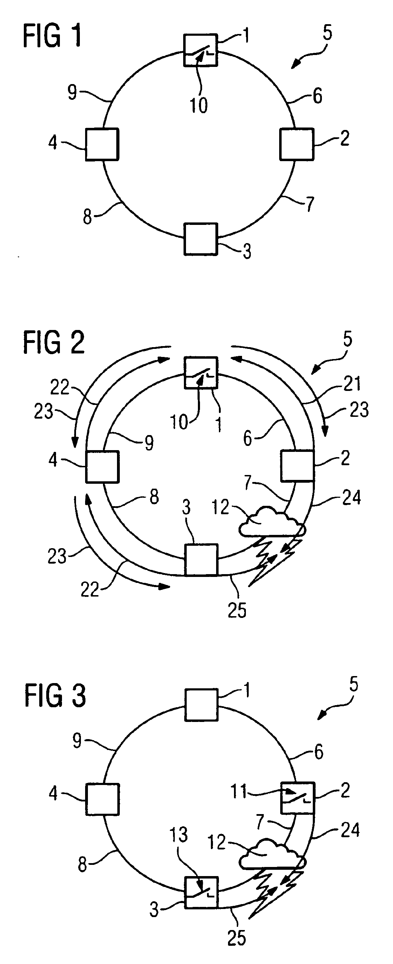

Gemäß FIG 1 ist ein Kommunikationsnetzwerk 5 in einer Ring-Topologie aufgebaut. Das Kommunikationsnetzwerk 5 umfasst einen ersten Knoten 1, einen zweiten Knoten 2, einen dritten Knoten 3 und einen vierten Knoten 4, wobei die Knoten 1 bis 4 als Kommunikationskomponenten ausgestaltet sind. Zum anfänglichen Betrieb des Kommunikationsnetzwerkes 5 wird der erste Knoten 1 als Ring-Master konfiguriert. Ein Ring-Master zeichnet sich dadurch aus, dass er den Ring logisch mittels eines ersten Schaltelementes 10 auftrennt. Neben dieser physikalischen Auftrennung des Ringes hat der Ring-Master die Aufgabe eines übergeordneten Wächters, welcher Störmeldungen aus dem gesamten Netz entgegennimmt und im Fehlerfall für eine koordinierte Wegeumschaltung sorgt.

Der Ring-Master, also der erste Knoten 1, ist über einen ersten Verbindungsweg 6 mit dem zweiten Knoten 2 verbunden, weiterhin ist der zweite Knoten 2 über einen zweiten Verbindungsweg 7 mit dem dritten Knoten 3 verbunden, der dritte Knoten 3 wiederum ist über einen dritten Verbindungsweg 8 mit dem vierten Knoten 4 verbunden und der vierte Knoten 4 ist über einen vierten Verbindungsweg 9 wiederum mit dem ersten Knoten 1, also dem -Ring-Master, verbunden und durch die Verbindung über die Verbindungswege 6,7,8,9 wird ein Ring gebildet.

Ein von einem beliebigen Knoten ausgesendeter Datenverkehr kann mittels dieses Ringes von sämtlichen anderen Teilnehmern des Kommunikationsnetzwerkes erreicht werden. Nicht in diesem Beispiel dargestellt, aber durchaus denkbar und üblich ist es, dass an den Knoten dieses Ringes wiederum Stichleitungen für weitere Kommunikationsteilnehmer und Knoten angeschlossen sind und an den weiteren Kommunikationsteilnehmern weitere Abzweige angeordnet sind.

Mit FIG 1 wurde also die ordnungsgemäße Funktion eines Kommunikationsnetzwerkes 5 in Ringtopologie dargestellt.

Gemäß FIG 2 wird nun im Gegensatz zu FIG 1 ein Störfall dargestellt. Das Kommunikationsnetzwerk 5 weist zwischen dem zweiten Knoten 2 und dem dritten Knoten 3 eine Unterbrechungsstelle 12 im zweiten Verbindungsweg 7 auf. Verfahrensgemäß wird diese Unterbrechung sowohl durch den zweiten Knoten 2 als auch durch den dritten Knoten 3 erkannt und es wird von jedem Knoten 2,3 eine Störmeldung 21,22 in Richtung des Ring-Masters abgesetzt. Der zweite Knoten 2 sendet eine erste Störmeldung 21 zum ersten Knoten 1. Der dritte Knoten 3 sendet eine zweite Störmeldung 22 ebenfalls in Richtung des ersten Knotens 1, auf dem Weg der zweiten Störmeldung 22 zum Ring-Master passiert die zweite Störmeldung 22 den vierten Knoten 4 und kann damit dem vierten Knoten 4 die durch die Unterbrechungsstelle 12 hervorgerufene Störung mitteilen. Die zweite Störmeldung 22 wird durch den vierten Knoten 4 an den ersten Knoten 1 weitergeleitet. Die Störmeldungen 21,22 werden somit durch das gesamte Kommunikationsnetzwerk 5 geschickt und erreichen damit jeden Knoten bzw. Netzwerkteilnehmer.

Durch die Störmeldungen 21,22 wird in den jeweiligen Knoten 1 bis 4 eine Filter-Datenbank zurückgesetzt. Zusätzlich wird durch die Störmeldungen 21,22 in den Knoten 1 bis 4 ein Lernen von Adressen abgeschaltet. D.h. ein Lern-Algorithmus, welcher dazu vorgesehen ist, den Datenverkehr adressoptimiert weiterzuleiten, wird deaktiviert. Damit wird ein "falsches" Lernen vermieden und ein möglicher neuer Weg schneller gültig und auch verwendet.

Nach Eingang der Störmeldungen 21,22 beim als Ring-Master konfigurierten ersten Knoten 1 setzt dieser eine Quittung 23 ab. Die Quittung 23 hat die Aufgabe die zuvor zurückgesetzte Filter-Datenbank wieder freizugeben und das Lernen wieder zu aktivieren. Da der als Ring-Mater konfigurierte erste Knoten 1 den Ring durch sein Schaltelement 10 immer noch physikalisch auftrennt, wird die Quittung 23 ausgehend von dem ersten Knoten 1 sowohl über den vierten Knoten 4 als auch zusätzlich über den zweiten Knoten 2 gesendet. Bei Eintreffen der Quittungen an dem zweiten Knoten 2 und an dem dritten Knoten 3, welche aufgrund der Unterbrechungsstelle 12 den zwischen ihnen bestehenden gestörten Verbindungsweg 7 aufweisen, wird jetzt ein quasi gleichzeitiges Umschalten der Master-Rolle durchgeführt. Dazu überträgt der erste Knoten 1 seine Master-Rolle auf den dritten Knoten 3. Dabei schließt der erste Knoten 1 sein erstes Schaltelement 10 und verbindet dadurch den zweiten Knoten 2 mit der ersten Verbindungsleitung 6 über den ersten Knoten 1 mit der vierten Verbindungsleitung 9 mit dem vierten Knoten 4, damit ist der Ring wieder geschlossen, weil er jetzt, hier durch die Unterbrechungsstelle 12, eine physikalische Öffnung der Verbindungswege zwischen dem zweiten Knoten 2 und dem dritten Knoten 3 aufweist. Der ehemalige Ring-Master stellt somit wieder eine Verbindung zu allen Knoten des Kommunikationsnetzwerkes 5 her.

Gemäß FIG 3 ist das Kommunikationsnetzwerk 5 mit dem zweiten Kommunikationsteilnehmer 2 als Ring-Master konfiguriert dargestellt. Das Kommunikationsnetzwerk 5 weist mit der Unterbrechungsstelle 12 weiterhin die bereits in der Beschreibung zu FIG 2 eingetretene Störung auf. Es kann aber nun weiterhin störungsfrei betrieben werden. Der neue Ring-Master, also der zweite Knoten 2, trennt das Kommunikationsnetzwerk 5 zusätzlich zur physikalischen Trennung durch das zweite Schaltelement 11 auch logisch auf, um im Reparaturfall ohne eine zusätzliche Wegeumschaltung direkt weiterbetrieben werden zu können.

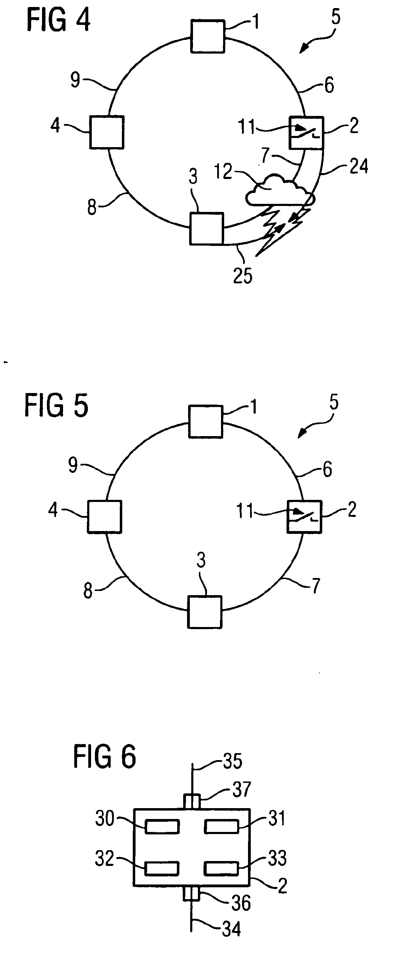

Durch die Überwachung eines jeden Verbindungsweges 6 bis 9 durch eines jeden Knotens 1 bis 4 kann auch sicher ein einseitiger Verbindungsverlust, wie er durch Trennung nur eines Adernpaares entstehen kann, erkannt werden und dem entsprechenden Verbindungsweg zugeordnet werden. Durch die Weitergabe der Master-Rolle an die Knoten bzw. den Knoten bei der physikalischen Störstelle wird die eine Kommunikationsstörung erzeugende erneute Wegeumschaltung vermieden. Nach der transienten Phase des Übertragens der Master-Rolle vom ersten Knoten 1 auf den zweiten Knoten 2, wobei aus Sicherheitsgründen das zweite Schaltelement 11 im zweiten Knoten 2 und ein drittes Schaltelement 13 im dritten Knoten 3 noch geöffnet sind, wird gemäß FIG 4 quasi der eingeschwungene Zustand im Störfall dargestellt, nunmehr ist nur noch das zweite Schaltelement 11 des zweiten Knotens 2 geöffnet. Das Kommunikationsnetzwerk 5 in seiner Ring-Topologie kann von nun an in einer leicht eingeschränkten Funktionsweise sicher weiterbetrieben werden.

Gemäß FIG 5 ist wiederum das vollständig intakte Kommunikationsnetzwerk 5 dargestellt. Nach einer Reparatur wurde die Unterbrechungsstelle 12 behoben und die zweite Verbindungsleitung 7 ist wieder vollständig intakt. Das Kommunikationsnetzwerk 5 wird von nun an mit dem zweiten Knoten 2 als Ring-Master weiter betrieben.

Beispielhaft wird gemäß FIG 6 der zweite Knoten 2 als eine Kommunikationskomponente mit den für das vorgeschlagene Verfahren ausgestalteten Filter-Datenbank 30, einem Überwachungsmittel 31, einem Sendemittel 32 zum Senden der Störmeldungen und einem Rücksetzmittel 33 dargestellt. Diese Kommunikationskomponente könnte neben ihrem ersten Anschluss 36 zur Aufnahme einer ersten Datenleitung 34 und ihrem zweiten Anschluss 37 zur Aufnahme einer zweiten Datenleitung 35 auch eine n-fache Anzahl von Anschlüssen, wie es beispielsweise bei einem Netzwerk-Switch vorgesehen ist, aufweisen.

Mittels des Überwachungsmittels 31 werden die in Schritt i) des Verfahrens beschriebenen Störungen der Verbindungswege überwacht. Die Sendemittel 32 dienen der Aussendung der im Schritt ii) des Verfahrens beschriebenen Störmeldungen 21,22.

Die Rücksetzmittel 33 sind dazu ausgestaltet die Filter-Datenbank 30 zurückzusetzen.

## Patentansprüche

1. Verfahren zum Betrieb eines Industrial Ethernet Kommunikationsnetzwerkes (5), welche in einer Ringtopologie aufgebaut ist, umfassend mehrere Knoten (1,2,3,4), welche über Verbindungswege (6,7,8,9) miteinander in Verbindung stehen, wobei ein erster Knoten (1) als ein Ring-Master konfiguriert wird, und wobei jeder Knoten (1, 2, 3, 4) ein Schaltelement (10, 11, 13) mit Möglichkeit zur physikalischen Trennung des Kommunikationsnetzwerks aufweist, mit folgenden Verfahrensschritten:
i) zum Erkennen einer Störung werden die Verbindungswege (6,7,8,9) mittels Überwachungsmittel (31) in den Knoten (1,2,3,4) überwacht,
ii) bei Erkennen einer Störung werden durch diejenigen Knoten (2,3), welche aufgrund der Störung den zwischen ihnen bestehenden gestörten Verbindungsweg aufweisen je eine erste Störmeldung (21) und eine zweite Störmeldung (22) in Richtung des als Ring-Master konfigurierten Knoten (1) gesendet, wobei jeder Knoten (1,2,3,4) die Störung gemeldet bekommt, wobei ein Lernmechanismus in den Knoten (1,2,3,4) durch die Störmeldung (21,22) deaktiviert wird,
iii) der Ring-Master eine Quittung (23) sendet, wobei bei Erreichen der Knoten (2,3), welche aufgrund der Störung den zwischen ihnen bestehenden gestörten Verbindungsweg aufweisen, zumindest auf einen dieser Knoten (2,3) die Funktion des Ring-Masters übertragen wird, umfassend eine Fähigkeit zum Öffnen des Schaltelements und zur Steuerung des in der Ringtopologie angeordneten Kommunikationsnetzwerks mittels Empfang von Störmeldungen anderer Knoten und Senden von Quittungen an andere Knoten, wobei durch die Quittung (23) der Lernmechanismus wieder aktiviert wird,
iv) und wobei das Schaltelement (10) des ersten Knotens (1) physikalisch und logisch geschlossen wird und das Schaltelement (11, 13) des zumindest einen Knotens (2, 3), auf den die Funktion des Ring-Masters übertragen wird, geöffnet wird.

2. Verfahren nach Anspruch 1,
wobei durch die Störmeldungen (21,22) eine Filter-Datenbank (30) in den Knoten (1,2,3,4) zurückgesetzt wird.

3. Verfahren nach einem der Ansprüche 1 bis 2,
wobei als Knoten (1,2,3,4) Ethernet-Kommunikationskomponenten eingesetzt werden.

4. Kommunikationskomponente (2) mit zumindest einem ersten Anschluss (36) für eine erste Datenleitung (34) und einem zweiten Anschluss (37) für eine zweite Datenleitung (35),
**gekennzeichnet durch** ein Überwachungsmittel (31), ein Sendemittel (32), eine Filter-Datenbank (30) und ein Rücksetzmittel (33), welche dazu ausgestaltet sind ein Verfahren nach einem der Ansprüche 1 bis 3 auszuführen.

## Claims

1. Method for operating an Industrial Ethernet communication network (5), which is laid out in a ring topology, comprising a number of nodes (1, 2, 3, 4) which are connected to each other via connection paths (6, 7, 8, 9), with a first node (1) being configured as a ring master and with each node (1, 2, 3, 4) having a switching element (10, 11, 13) with the option for physical disconnection of the communication network, with the following method steps:
i) to detect a fault the connection paths (6, 7, 8, 9) are monitored by monitoring means (31) in the nodes (1, 2, 3, 4),
ii) on detection of a fault, those nodes (2, 3) which, as a result of the fault have the faulty connection path existing between them, each send a first fault message (21) and a second fault message (22) in the direction of the node (1) configured as the ring master, with each node (1, 2, 3, 4) being notified of the fault, with a learning mechanism being deactivated in the nodes (1, 2, 3, 4) by the fault message (21, 22),
iii) the ring master sends an acknowledgement (23) wherein, when it reaches the nodes (2, 3), having the faulty connection path existing between them as a result of the fault, the function of the ring master is transferred at least to one of these nodes (2, 3), comprising a capability to open the switching element and to control the communication network arranged in the ring topology by means of receipt of fault messages from other nodes and sending of acknowledgements to other nodes, with the learning mechanism being activated again by the acknowledgement (23),
iv) and with the switching element (10) of the first node (1) being physically and logically closed and the switching element (11, 13) of the at least one node (2, 3) to which the function of the ring master is transferred being opened.

2. Method according to claim 1,
with a filter database (30) in the nodes (1, 2, 3, 4) being reset by the fault messages (21, 22).

3. Method according to one of claims 1 to 2,
with Ethernet communication components being used as nodes (1, 2, 3, 4).

4. Communication component (2) with at least one first connection (36) for a first data line (34) and a second connection (37) for a second data line (35),
**characterised by** a monitoring means (31), a sending means (32), a filter database (30) and a reset means (33) which are designed to execute a method as claimed in one of claims 1 to 3.

## Revendications

1. Procédé pour faire fonctionner un réseau ( 5 ) de communication éthernet industriel, qui est constitué dans une topologie en anneau, comprenant plusieurs noeuds ( 1, 2, 3, 4 ) qui sont reliés entre eux par des chemins ( 6, 7, 8, 9 ) de liaison, un premier noeud (1) étant configuré en maître d'anneau, et dans lequel chaque noeud ( 1, 2, 3, 4 ) comprend un anneau ( 10, 11, 13 ) de commutation avec possibilité de séparation physique du réseau de communication, comprenant les stades de procédé suivantes :
i) pour détecter une panne, les chemins ( 6, 7, 8, 9) de liaison sont contrôlés à l'aide de moyens (31) de contrôle dans les noeuds ( 1, 2, 3, 4 ),
ii) lorsqu'une panne est détectée, les noeuds (2, 3), qui ont, en raison de la panne, le chemin de liaison entre eux perturbé, envoient respectivement un premier message ( 21 ) de panne et un deuxième message ( 22 ) de panne en direction du noeud (1) configuré en maître d'anneau, chaque noeud ( 1, 2, 3, 4 ) étant averti de la panne, un mécanisme d'apprentissage dans les noeuds ( 1, 2, 3, 4) étant désactivé par le message ( 21, 22 ) de panne,
iii) le maître d'anneau envoie un accusé ( 23 ) de réception, dans lequel, lorsque sont atteints les noeuds ( 2, 3), qui, en raison de la panne, ont un trajet de liaison entre eux qui est perturbé, la fonction du maître anneau est transférée au moins à l'un de ces noeuds (2, 3), fonction comprenant une capacité d'ouvrir l'élément de commutation et de commander le réseau de communication disposé suivant la topologie en anneau au moyen de la réception de messages de panne d'autres noeuds et d'envoi d'accusés de réception à d'autres noeuds, le mécanisme d'apprentissage étant réactivé par l'accusé (23) de réception,
iv) et dans lequel l'élément ( 10 ) de commutation du premier noeud (1) est fermé physiquement et logiquement et l'élément ( 11, 13 ) de commutation du au moins un noeud ( 2, 3 ), auquel la fonction du maître anneau est transférée, est ouvert.

2. Procédé suivant la revendication 1,
dans lequel une base de données de filtre (30) dans les noeuds ( 1, 2, 3, 4) est remise à l'état initial par les messages ( 21, 22 ) de panne.

3. Procédé suivant l'une des revendications 1 à 2,
dans lequel on utilise comme noeuds (1, 2, 3, 4) des composants de communication éthernet.

4. Composant (2) de communication ayant au moins une première borne (36) pour une première ligne (34) de données et une deuxième borne ( 37 ) pour une deuxième ligne ( 35 ) de données, **caractérisé par** un moyen ( 31 ) de contrôle, par un moyen (32) d'émission, par une base de données de filtre ( 30) et par un moyen ( 33 ) de remise à l'état initial, qui est conformé pour exécuter un procédé suivant l'une des revendications 1 à 3.
